# EUROPEAN PATENT APPLICATION

(11) **EP 1 182 482 A1**
(43) Date of publication of application: **27.02.2002**
(21) Application number: 01908164.5
(22) Date of filing: 28.02.2001
(51) Int. Cl.: G02B 6/42, G02B 6/32

(54) **OPTICAL SEMICONDUCTOR MODULE AND OPTICAL AMPLIFIER**

(30) Priority: 01.03.2000 JP 2000055547
(71) Applicant: MITSUBISHI DENKI KABUSHIKI KAISHA, Tokyo 100-8310 (JP)
(72) Inventor: ONODERA, Takayuki Mitsubishi Denki Kabushiki Kai., Tokyo 100-8310 (JP); SAKAI, Kiyohide Mitsubishi Denki Kabushiki Kaisha, Tokyo 100-8310 (JP)
(74) Representative: Pfenning, Meinig & Partner
(86) International application number: JP0101527
(87) International publication number: WO0165293

(57) **Abstract**

A first lens and a second lens are used in an optical semiconductor module, an entrance plane of the second lens is formed in a cylindrical shape. Accordingly, an optical semiconductor module can be obtained by changing a mode field of an optical fiber to an elliptically-shaped apparent mode field by using the second lens so as to be possible to efficiently couple a laser beam radiated from an optical semiconductor element with the optical fiber.

## Description

### TECHNICAL FIELD

The present invention relates to an optical semiconductor module in which a laser beam radiated from a light emitting device such as a semiconductor laser is coupled with an optical fiber, and the present invention relates to a light amplifier in which the optical semiconductor module is used as an excitation light source.

### BACKGROUND ART

As an optical system of a conventional laser diode module for optical communication, "Optical Module" is disclosed in Published Unexamined Japanese Patent Application No. H11-2746 (1999).

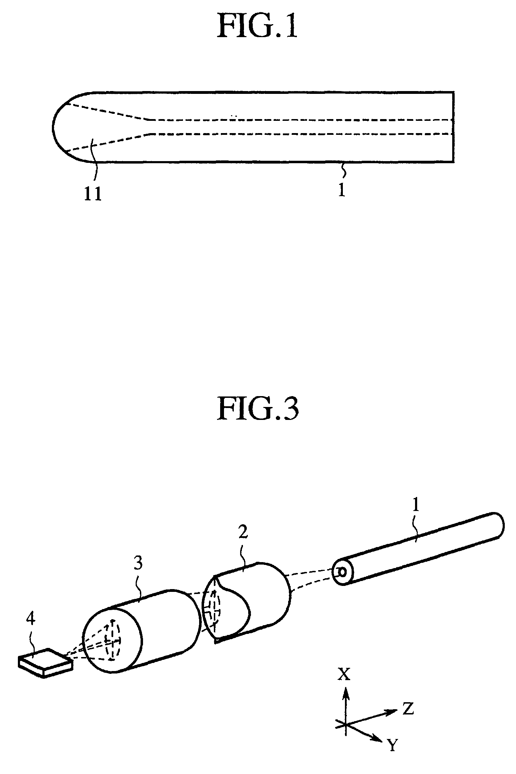

Fig. 1 is a view showing an optical system of a conventional optical semiconductor module. In Fig. 1, 1 indicates an optical fiber. 11 indicates a core of the optical fiber 1. A shown in Fig. 1, the optical fiber 1 is processed to form a convex curved surface on a tip (or an entrance plane) of the optical fiber 1. The convex curved surface of the optical fiber 1 is curved in a direction corresponding to a layered direction (hereinafter, called a longitudinal direction of an optical semiconductor element) of an active layer and clad layers existing in an optical semiconductor element. Therefore, a refractive angle of the top of the optical fiber 1 for a laser beam radiated from the optical semiconductor element is increased in the direction corresponding to the longitudinal direction of the optical semiconductor element, and a mode field of the optical fiber 1 in the direction corresponding to the longitudinal direction of the optical semiconductor element is shortened so as to couple the optical semiconductor element with the optical fiber. That is, in this optical system of the conventional optical semiconductor module, the mode field of the optical fiber 1 is lengthened in a lateral direction perpendicular to both a direction of an optical axis of the optical semiconductor element and the longitudinal direction, and a coupling efficiency between the laser beam radiated from the optical semiconductor element and the optical fiber 1 is improved.

In the optical system of the optical module disclosed in the above literature, an elliptical shape of the mode field of the laser beam radiated from the optical semiconductor module can be reliably changed to a circular shape. However, because the mode field of the optical fiber 1 in the direction corresponding to the longitudinal direction of the optical semiconductor element is shortened, an aspect ratio (or a ratio of a mode field in the lateral direction to a mode field in the longitudinal direction) in the optical fiber 1 is considerably changed in dependence on a slight manufacturing error of a radius of curvature of the convex curved surface formed on the tip of the optical fiber 1. Therefore, in a convex curved surface processing method of increasing the refractive angle of the tip of the optical fiber 1 in the direction corresponding to the longitudinal direction of the optical semiconductor element, it is realized according to inventor's calculation that a manufacturing error allowed for the radius of curvature of the convex curved surface formed on the tip of the optical fiber 1 is almost equal to 1 µm. Therefore, in cases where the convex curved surface processing method is adopted for the mass production of the optical module, the coupling efficiency varies widely.

Also, in cases where an oscillation wavelength of the optical semiconductor element is set to a band of 980 nm, the optical module is often used as an excitation light source used for a light amplifier. In this case, because a high light output power is required of the optical module, it is difficult to arrange an isolator in the optical system of the optical module. In cases where no isolator can be arranged in the optical system, because a reflected laser beam occurring in the optical semiconductor module or on the outside of the optical semiconductor module is again incident on the optical semiconductor element as a returned laser beam, it is well known that the oscillation wavelength of the optical semiconductor element is set to a considerably unstable state. Also, in case of the optical semiconductor module for the band of 980 nm, to avoid the unstableness of the oscillation wavelength of the laser beam, an optical fiber, in which a diffraction grating called a fiber grating is formed, is arranged in the optical semiconductor module. In this optical semiconductor module, a laser beam having a desired wavelength is reflected on the fiber grating of the optical fiber and is again incident on the optical semiconductor element. Therefore, the oscillation wavelength of the laser beam in the optical semiconductor element is stabilized.

However, in case of the use of an optical semiconductor module having a low coupling efficiency such as the optical system of the conventional optical semiconductor module, unless a reflectance of the fiber grating of the optical fiber is heightened, it is impossible to stabilize the oscillation wavelength of the laser beam in the optical semiconductor element. Therefore, the light output power of the conventional optical semiconductor module is further decreased.

Also, in case of the use of a light amplifier, because an optical semiconductor module having a low coupling efficiency and a low light output power is used, a gain in the light amplifier is decreased, and a noise figure in the light amplifier is increased. In particular, in cases where the oscillation wavelength of the laser beam in the optical semiconductor element is unstable, the gain and noise figure in the light amplifier is changed. Therefore, it is difficult to sufficiently obtain excellent characteristics of the light amplifier.

The present invention is provided to solve the above-described problem, and an object of the present invention is to provide an optical semiconductor module in which a lens processing precision and an assembling precision of an optical semiconductor module are relaxed, a coupling efficiency between an optical semiconductor element and an optical fiber is improved, and an optical semiconductor module having a stable oscillation wavelength is provided.

In addition, the object of the present invention is to provide a light amplifier in which the optical semiconductor module is used to obtain the light amplifier having a high light output power and a low noise figure.

### DISCLOSURE OF THE INVENTION

An optical semiconductor module of a first invention comprises an optical semiconductor element, a first lens arranged at a position through which a laser beam radiated from the optical semiconductor element is transmitted, a second lens which is arranged at a position, through which the laser beam transmitted through the first lens is transmitted, and has a laser beam entrance plane which is perpendicular to an optical axis of the optical semiconductor element and is formed in a cylindrical shape, and an optical fiber arranged at a position at which the laser beam transmitted through the second lens is converged.

Therefore, because a degree of convergence of the laser beam in a longitudinal direction to the optical axis of the optical semiconductor element can differ from a degree of convergence of the laser beam in a horizontal direction to the optical axis of the optical semiconductor element, a coupling efficiency of the optical fiber can. be heightened.

An optical semiconductor module of a second invention is
characterized in that an end face of the second lens, from which the laser beam is output, is formed in a flat shape in an optical system of the first invention.

Therefore, because a degree of convergence of the laser beam in a longitudinal direction to the optical axis of the optical semiconductor element can differ from a degree of convergence of the laser beam in a horizontal direction to the optical axis of the optical semiconductor element, a coupling efficiency of the optical fiber can be heightened.

An optical semiconductor module of a third invention is characterized in that an end face of the second lens, from which the laser beam is output, is attached to the optical fiber by using a bonding agent or a welding process in an optical system of the first or second invention.

Therefore, because the second lens is connected with the optical fiber, the number of elements can be decreased, the assembling work can be made easy, and the efficiency of coupling to the optical fiber can be heightened.

An optical semiconductor module of a fourth invention is characterized in that a refractive index of the second lens differs from a refractive index of a core of the optical fiber by 3 % or less in an optical system of the third invention.

Therefore, because the difference in refractive index between the second lens and the optical fiber is set to 3 % or less, a laser beam reflected and returned is decreased, oscillation conditions of the optical semiconductor element can be stabilized, and the efficiency of coupling to the optical fiber can be heightened.

An optical semiconductor module of a fifth invention is
characterized in that a film of a low reflectance for the laser beam having a wavelength of a band of 980 nm is deposited on both the first lens and the second lens, and the optical semiconductor element is formed of a semiconductor laser which oscillates the laser beam at the wavelength of the band of 980 nm in the first, second, third or fourth invention.

Therefore, a film of a low reflectance for the laser beam having a wavelength of a band of 980 nm is deposited on both the first lens and the second lens, and a semiconductor laser, which oscillates the laser beam at the wavelength of the band of 980 nm, is used as the optical semiconductor element. Accordingly, a laser beam reflected and returned is decreased, oscillation conditions of the optical semiconductor element can be stabilized, and the efficiency of coupling to the optical fiber can be heightened.

An optical semiconductor module of a sixth invention is
characterized in that a periodic diffraction grating is formed in a core of the optical fiber in one of the first to fifth inventions.

Therefore, because a periodic diffraction grating is formed in a core of the optical fiber, oscillation conditions of the optical semiconductor element can be stabilized, and the efficiency of coupling to the optical fiber can be heightened.

An optical semiconductor module of a seventh invention is characterized in that a diameter of a core of the optical fiber is enlarged at an end face of the optical fiber on which the laser beam transmitted through the second lens is incident in one of the first to sixth inventions.

Therefore, because the optical fiber, of which a diameter of the core is enlarged in the neighborhood of the end face of the optical fiber on which the laser beam is incident, is used, the assembling work can be made easy, the positional precision for elements can be relaxed, and the efficiency of coupling to the optical fiber can be heightened.

An optical semiconductor module of an eighth invention is
characterized in that a radius of curvature of a convex curved surface of the second lens is equal to 70 µm or less, and a length of the second lens in the optical axis is equal to 210 µm or less in one of the first to seventh inventions.

Therefore, a radius of curvature of a convex curved surface of the second lens is set to be equal to 70 µm or less, and a length of the second lens in the optical axis is set to be equal to 210 µm or less. Accordingly, the astigmatic difference of the laser beam incident on the optical fiber can be decreased, and the efficiency of coupling to the optical fiber can be heightened.

An optical amplifier of a ninth invention, comprises an optical semiconductor module according to one of the first to eighth inventions, and an erbium doped optical fiber connected with the optical semiconductor module so as to receive a laser beam output from the optical semiconductor module in the optical semiconductor module.

Therefore, by using the optical semiconductor module according to one of the first to eighth inventions for the optical amplifier, an optical amplifier having a high saturation output power and a low noise figure can be obtained.

An optical amplifier of a tenth invention, comprises an optical semiconductor module according to one of the first to eighth inventions, and an erbium doped optical fiber connected with the optical semiconductor module so as to receive a laser beam output from the optical semiconductor module in the optical semiconductor module through an optical combining and branching unit.

Therefore, by using the optical semiconductor module according to one of the first to eighth inventions for the optical amplifier, an optical amplifier having a high saturation output power and a low noise figure can be obtained.

### BRIEF DESCRIPTION OF THE DRAWINGS

Fig. 1 is a view showing an optical system of a conventional optical semiconductor module.
Fig. 2 is a schematic view showing an optical semiconductor module according to a first embodiment of the present invention.
Fig. 3 is a constitutional view of an optical system picked up from the optical semiconductor module of the first embodiment of the present invention.
Fig. 4 is an explanatory view showing a radiation pattern of a laser beam radiated from an optical semiconductor element.
Fig. 5(a) is a view of a second lens seen along a direction (or a direction perpendicular to a Y-Z plane) of an X axis, and Fig. 5(b) is a view of the second lens seen along a direction (or a direction perpendicular to an X-Z plane) of an Y axis.
Fig. 6 is a sectional view of a Y-Z plane showing a second lens and an optical fiber connected with each other.
Fig. 7 shows astigmatic difference of a laser beam.
Fig. 8 shows an apparent mode field of an optical fiber formed by a second lens seemingly.

### BEST MODE FOR CARRYING OUT THE INVENTION

Hereinafter, the best mode for carrying out the present invention will now be described with reference to the accompanying drawings to explain the present invention in more detail.

### EMBODIMENT 1

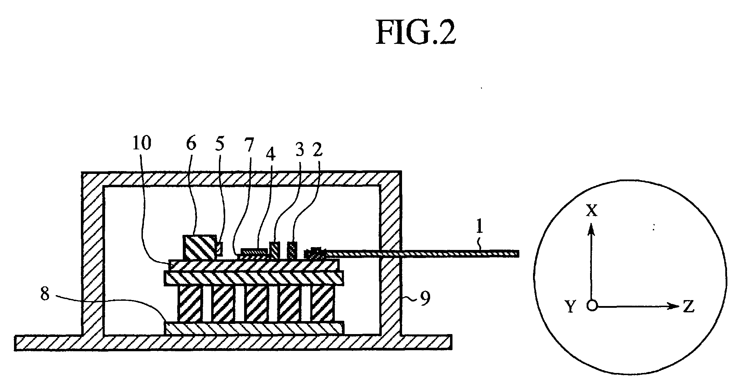

Fig. 2 is a schematic view showing an optical semiconductor module according to a first embodiment of the present invention. In Fig. 2, 1 indicates an optical fiber. 2 indicates a second lens. 3 indicates a first lens. 4 indicates an optical semiconductor element. 5 indicates a monitoring photo diode (PD). 6 indicates a PD carrier. 7 indicates a sub-mount. 8 indicates a Peltier cooler. 9 indicates a hermetic package. 10 indicates a chip carrier.

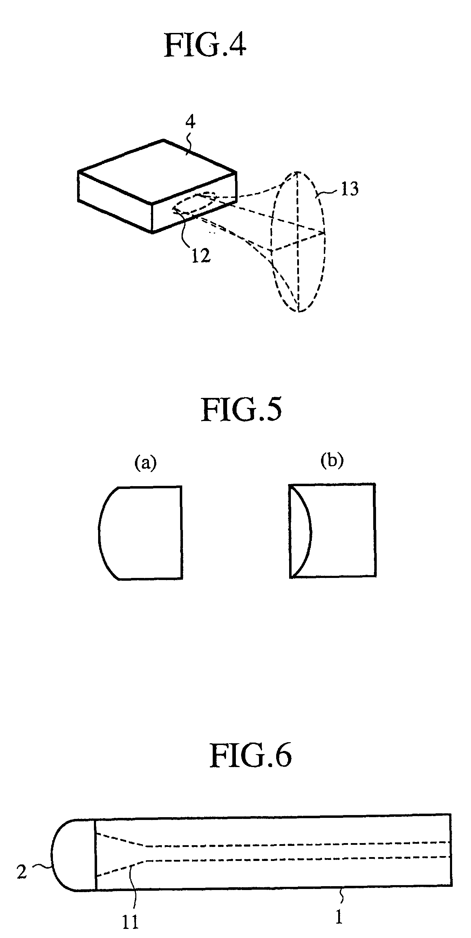

Fig. 3 is a constitutional view of an optical system picked up from the optical semiconductor module of the first embodiment of the present invention. Fig. 4 is an explanatory view showing a radiation pattern of a laser beam radiated from the optical semiconductor element 4. In Fig. 4, 12 indicates a mode field. 13 indicates a far field. The optical semiconductor element 4 has the mode field 12 lengthened in the lateral direction. Because of the shape of the mode field 12, the far field 13 is formed in a shape lengthened in a longitudinal direction.

In Fig. 2, an X axis is directed to the longitudinal direction, and the longitudinal direction is the same as a layered direction of an active layer of the optical semiconductor element 4. A Y axis is directed from a reverse side to a front side of the drawing. A Z axis is directed to a direction of an optical axis.

Fig. 5(a) and Fig. 5(b) show a shape of the second lens 2. Fig. 5(a) is a view of the second lens 2 seen from a direction (or a direction perpendicular to a Y-Z plane) of the X axis, and Fig. 5(b) is a view of the second lens 2 seen from a direction (or a direction perpendicular to an X-Z plane) of the Y axis. A convex curved surface is formed on an end face (or an entrance plane) of the second lens 2 facing the first lens 3. The convex curved surface of the second lens 2 has no curvature in the X direction agreeing with the layered direction of the active layer of the optical semiconductor element 4, but the convex curved surface of the second lens 2 has a curvature in the Y direction perpendicular to the layered direction.

In cases where an oscillating wavelength of a laser beam radiated from the optical semiconductor element 4 is equal to 0.98 µm, the mode field 12 of the optical semiconductor element 4 has both a diameter of 1.6 µm in the X direction and a diameter of about 3 µm in the Y direction as typical values. Also, in cases where the optical fiber 1 is formed of a single mode optical fiber having a cut off of 0.98 µm or less, a diameter of a clad of the optical fiber 1 is equal to 125 µm, a diameter of a mode field of the optical fiber 1 is equal to about 6.2 µm. The diameter of the mode field of the optical fiber 1 is almost equal to a diameter of a core of the optical fiber 1. To efficiently couple the laser beam radiated from the optical semiconductor element 4 with the optical fiber 1, an optical system is required to change an elliptically-shaped mode field of the optical semiconductor element 4 to a circularly-shaped mode field of the optical fiber 1. In this case, a change magnification of the optical system in the X direction is set to about 4 magnifications to change the diameter of 1.6 µm in the mode field 12 of the optical semiconductor element 4 to about 6.2 µm, and a change magnification of the optical system in the Y direction is set to about 2 magnifications to change the diameter of 3 µm in the mode field 12 of the optical semiconductor element 4 to about 6.2 µm. That is, the change magnifications of the optical system in both the X direction and the Y direction are set so as to differ from each other. Also, in addition to the setting of the change magnifications of the optical system, it is required to design the optical system so as to reduce an astigmatic difference of the laser beam.

In cases where a direction matching optical system, in which the second lens 2 having a curvature in the Y direction is arranged, is considered as shown in Fig. 2, a position, at which a mode field of the optical fiber 1 is formed, can be obtained according to the calculation for the optical system. Here, a refractive index of the air is set to 1, and refractive indexes of both the second lens 2 and a core of the optical fiber 1 are set to 1.45 together. Also, as to a shape of the second lens 2, a distance between both tips of the second lens 2 in the Z direction is set to 90 µm, and a radius of curvature of the convex curved surface of the second lens 2 in the Y direction is set to 50µm. Also, to simplify the calculation, a distance between the optical fiber 1 and the second lens 2 is set to 0. In the above conditions, a position, at which a mode field of the optical fiber 1 is formed, is placed on a tip (or an entrance plane) of the optical fiber 1, and a diameter of a mode field of the optical fiber 1 is equal to 12 µm. This means that a mode field having a diameter (12 µm) almost two times longer than the diameter (about 6.2 µm) of the core of the optical fiber 1 is formed on the tip of the optical fiber 1. Therefore, when the second lens 2 and the optical fiber 1 are connected with each other, it is realized that the mode field is a virtual image. In contrast, because the second lens 2 has no curvature in the X direction, a diameter of the mode field, which is formed on the tip of the optical fiber 1, is the same as 6.2µm. Therefore, the mode field of the optical fiber 1 formed by the second lens 2 is a virtual image having a shape lengthened in the lateral direction and is set to an aspect ratio equal to 2, and an astigmatic difference is set to almost zero. Because the aspect ratio of the optical semiconductor element 4 is set to almost 2, it is realized that the correction for both the aspect ratio and the astigmatic difference of the laser beam can be almost perfectly performed. In cases where an optical system having the magnification of 4 due to the function of the first lens 3 is arranged in the optical semiconductor module, an excess loss due to the difference in the mode field can be eliminated in the image formation of the laser beam radiated from the optical semiconductor element 4 on the optical fiber. 1. Here, even though a radius of curvature of the convex curved surface of the second lens 2 in the Y direction is changed by 10 %, a degree of change in the astigmatic difference is almost ±10 µm at most. Therefore, influence of the change of the radius of curvature on a coupling efficiency between the optical semiconductor element 4 and the optical fiber 1 can be disregarded. Also, in this case, because it is realized according to the calculation that a change of the diameter of the mode field is almost ±1.5 µm at most, the coupling efficiency is not considerably changed. Accordingly, as is described above, it is not required to form the convex curved surface in the second lens 2 with high processing precision, and it is expected that the coupling efficiency between the optical semiconductor element 4 and the optical fiber 1 can be improved.

### EMBODIMENT 2

In the first embodiment, a lens system composed of the first lens 3 and the second lens 2 is arranged in the optical semiconductor module. In this case, a coupling optical system is complicated, and the number of optical elements and the number of steps of the assembling work are increased. The complication of the coupling optical system and the increase of both the optical elements and the assembling work influence on the assembling precision of the optical semiconductor module. To prevent these problems, in a second embodiment, the second lens 2 is tightly attached to the optical fiber 1 by using a bonding agent, or the second lens 2 is tightly attached to the optical fiber 1 according to a melting method. Therefore, the number of optical elements is decreased, and the assembling work can be easily performed. In addition, as is described in the first embodiment, it is not required to process the second lens 2 with high processing precision. Therefore, even though the second lens 2 is tightly attached to the optical fiber 1 by using a bonding agent or the second lens 2 is tightly attached to the optical fiber 1 according to a melting method, it is expected that the coupling efficiency between the optical semiconductor element 4 and the optical fiber 1 can be improved.

Here, the connection of the second lens 2 with the optical fiber 1 according to a melting method is ideal. That is, in the melting method, a cylindrical glass material, of which a diameter is the same as that of the clad of the optical fiber, is melted and is attached to the optical fiber 1 and the second lens 2, and the cylindrical glass material is polished to a desired length and shape.

### EMBODIMENT 3

As is described in the second embodiment, the optical fiber 1 and the second lens 2 are connected with each other in a third embodiment. In cases where a refractive index of the core of the optical fiber 1 differs from that of the second lens 2, Fresnel reflection of the laser beam necessarily occurs on an end face of the optical fiber 1. In cases where the optical semiconductor element 4 is formed of a semiconductor laser, because the laser beam reflected on the end face of the optical fiber 1 is returned to the semiconductor laser, oscillation conditions in the semiconductor laser are made unstable. For example, an optical fiber often used for an optical connector is processed according to a physical contact (PC) polishing, and a maximum value of a reflectance of the optical fiber is equal to -40 dB. Therefore, to obtain a reflectance of -40 dB in the optical fiber 1, it is required to set a difference in refractive index between the second lens 2 and the core of the optical fiber 1 to about 3 %. Accordingly, in cases where the difference in refractive index between the second lens 2 and the core of the optical fiber 1 is set to about 3 %, oscillation conditions in the optical semiconductor element 4 can be made stable. Also, because the reflectance on the optical fiber 1 is lowered, transmittance of the optical fiber 1 is heightened. Accordingly, the coupling efficiency between the optical semiconductor element 4 and the optical fiber 1 can be improved in the same manner as in the first embodiment.

### EMBODIMENT 4

To stably oscillate the laser beam in the optical semiconductor element 4, it is required to decrease the laser beam returned from the optical fiber 1 to the optical semiconductor element 4. The Fresnel reflection of the laser beam necessarily occurs on end faces (or entrance planes) of both the first lens 3 and the second lens 2 in addition to the end face of the optical fiber 1. In a fourth embodiment, an antireflection film of low reflectance is deposited on the end faces of both the first lens 3 and the second lens 2. Accordingly, the same effect as that obtained in the third embodiment can be obtained.

### EMBODIMENT 5

In cases where the optical semiconductor module is used as an excitation light source used for a light amplifier, a Fabry-Perrot type laser is often used as the optical semiconductor element 4. The Fabry-Perrot type laser radiates a laser beam having a wavelength of a band of 980 nm. In cases where a laser beam of a desired wavelength, which is reflected and returned from the outside, is again incident on the optical semiconductor element 4, it is possible to perform the laser oscillation by using the reflected laser beam. In this case, it is preferred that a periodic diffraction grating is formed in the optical fiber 1. As a method of forming the diffraction grating in the optical fiber 1, electro-magnetic wave such as ultraviolet ray is radiated into the core of the optical fiber 1. Therefore, it is possible to form refractive index anomalous points in the core of the optical fiber 1. A refractive index in each refractive index anomalous point differs from that in an area surrounding the refractive index anomalous point. When a desired wavelength of the laser beam is expressed by λ, the refractive index anomalous points are formed at equal intervals of λ/2. In this case, the laser beam of the desired wavelength can be selectively reflected. Accordingly, the number of elements can be decreased, and the laser beam can be stably oscillated in the optical semiconductor element 4. In addition, as is described in the first embodiment, because of the effect of correcting the aspect ratio, the same effect as that described in the first embodiment can be obtained. Here, because the coupling efficiency is improved, the refractive index of the diffractive grating of the present invention can be suppressed to a low value. Therefore, because the refractive index of the diffractive grating can be decreased in addition to the improvement of the coupling efficiency, a light output power higher than that of the conventional optical semiconductor module can be obtained.

### EMBODIMENT 6

The optical fiber 1 has the core and the clad. Because an amount of dopant added to the core differs from that added to the clad, the refractive index of the core differs from that of the clad by 1 to 3 %. In cases where the dopant included in the core is diffused into the clad, an area of the core is enlarged in the optical fiber 1. The dopant included in the core can be diffused into the clad when the tip of the optical fiber 1 b is heated by using a gas burner. Fig. 6 is a sectional view of the Y-Z plane showing the second lens 2 and the optical fiber 1 connected with each other. Because an area of the core of the optical fiber 1 is gradually enlarged toward the tip of the optical fiber 1, the diameter of the mode field of the optical fiber 1 is gradually increased toward the tip of the optical fiber 1.

In cases where an optical axis of the optical semiconductor element 4 is matched with that of the optical fiber 1 of which the core is enlarged, it is well known that a tolerance curve in the adjustment of the optical axis of the optical fiber 1 is widened. As an example of experimental results reported, though tolerance of 1 dB is equal to 1.5 µm when the diameter of the mode field of the optical fiber 1 is set to 6 µm, the tolerance of 1 dB is widened to about 3 µm when the diameter of the mode field of the optical fiber 1 is increased to 10 µm. Here, even though the diameter of the core is increased, it is ascertained that the coupling loss is not increased. Therefore, an excellent coupling efficiency can be obtained. In this embodiment, it is expected that the tolerance is relaxed.

As is described above, the diameter of the mode field of the optical fiber 1 is increased by heating the tip of the optical fiber, and the optical fiber 1 is connected with the second lens 2. Accordingly, the coupling efficiency can be improved as is described in the first embodiment, and a positional precision in the position matching of elements with the optical semiconductor element 4 and the optical fiber 1 can be relaxed.

### EMBODIMENT 7

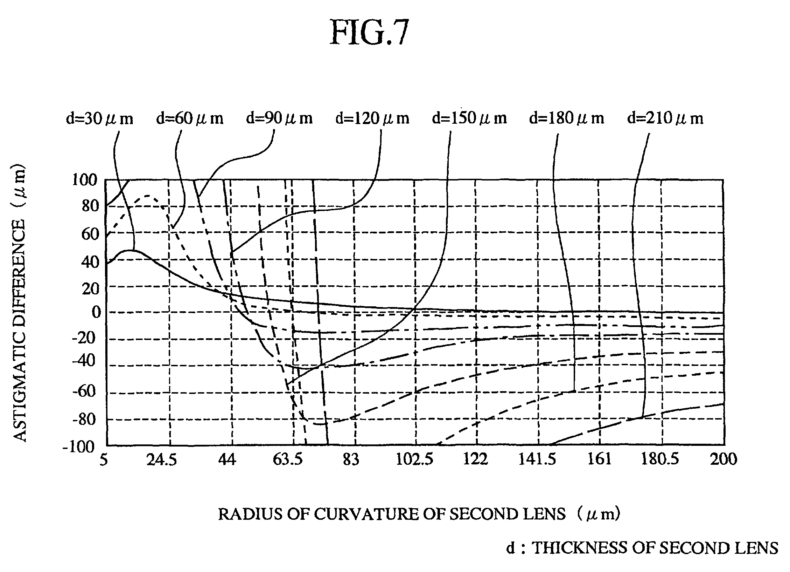

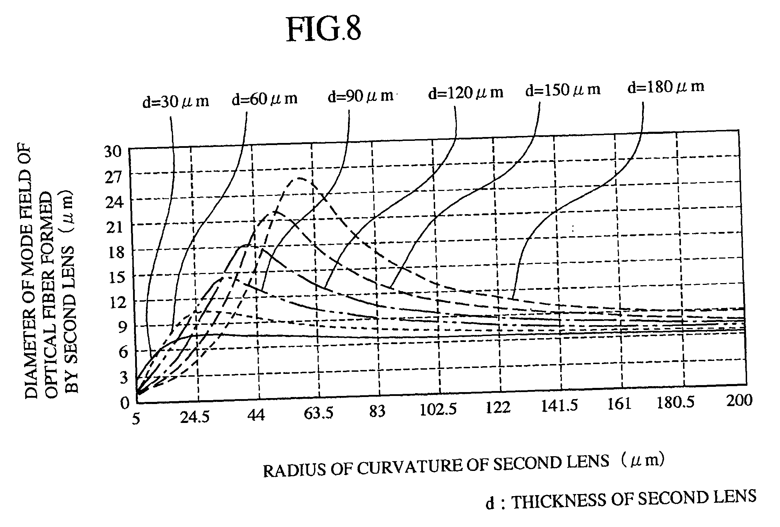

To improve the coupling efficiency, it is required to correct the astigmatic difference of the laser beam and the aspect ratio of the mode field. Fig. 7 and Fig. 8 show results obtained in the calculation of the astigmatic difference of the laser beam and an apparent mode field of the optical fiber 1 formed by the second lens 2. In Fig. 7, a Y axis indicates an astigmatic difference, and an X axis indicates a radius of curvature of the convex curved surface of the second lens 2 in the direction of the Y axis. In Fig. 8, a Y axis indicates a diameter of an apparent mode field of the optical fiber 1 formed by the second lens 2, and an X axis indicates a radius of curvature of the convex curved surface of the second lens 2 in the direction of the Y axis. In the calculation, the refractive index of the core of the optical fiber 1 and the refractive index of the second lens 2 are set to 1.45 together, a distance between the second lens 2 and the optical fiber 1 is set to 0, and the mode field of the optical fiber 1 is set to 6.2 µm. As is apparent in the results of the calculation, when a thickness of the second lens 2 is set to 210 µm, a radius of curvature corresponding to the astigmatic difference equal to 0 is equal to about 70 µm. In cases where the thickness of the second lens 2 is larger than the thickness of 210 µm, the astigmatic difference is considerably changed with the radius of curvature. Therefore, in cases where the thickness of the second lens 2 is larger than the thickness of 210 µm, it is required to form the convex curved surface of the second lens 2 with considerably high processing precision. Therefore, it is not realistic to use the second lens 2 having the thickness larger than the thickness of 210 µm. Also, in this case, because the diameter of the apparent mode field of the optical fiber 1 formed by the second lens 2 is equal to almost 20 µm, the aspect ratio of the mode field of the optical fiber 1 is set to 3 or more (20 µm/6.2 µm). Therefore, the aspect ratio higher than 3 is not required. In cases where the radius of curvature equal to or lower than 70 µm in the second lens 2 and the thickness equal to or lower than 210 µm in the second lens 2 are satisfied, the second lens 2 can be processed with high precision required practically.

Accordingly, in cases where the radius of curvature equal to or lower than 70 µm in the end face of the second lens 2 facing the first lens 3 and the thickness equal to or lower than 210 µm in the second lens 2 are satisfied, the coupling efficiency can be improved as is described in the first embodiment.

### EMBODIMENT 8

In case of an optical fiber in which a rare earth element is doped into the core, when ions of the doped rare earth element are excited by radiating a laser beam of a high power from the outside to the optical fiber, an inverted population of the ions of the doped rare earth element occurs in energy levels. Thereafter, when an optical signal having a wavelength corresponding to an energy difference between a laser upper level and a laser lower level is input to the optical fiber, energy of the ions is released to generate the induced emission of laser beam, and the optical signal is amplified. In cases where erbium element is doped into the core of the optical fiber, when ions of the erbium element are excited by inputting the laser beam of the band of 980 nm to the core, an inverted population of the ions of the erbium element can be obtained at an energy gap corresponding to the laser beam having a wavelength of 1550 nm. Therefore, in cases where the optical fiber with the doped erbium element is used with an optical semiconductor module used for an optical amplifier, a laser beam, which has a wavelength of a band of 1550 nm and is often used for optical communication, can be amplified. Also, in cases where the intensity of an ion-exciting laser beam is increased, the density of the inverted population in the energy levels is heightened. Therefore, the gain of the optical amplifier can be increased, and a noise figure of the optical amplifier can be decreased.

To increase the intensity of an ion-exciting laser beam, a 980 nm band type optical semiconductor module using an optical system excellent in the coupling efficiency is required. Therefore, in cases where an optical amplifier is provided by connecting a radiation end of the optical fiber 1 of the optical semiconductor module, in which the optical system described in one of the first to seventh embodiments is adopted, with an optical fiber with the doped erbium element through an optical combing-branching unit, an optical amplifier excellent in the gain and the noise figure can be provided.

### INDUSTRIAL APPLICABILITY

As is described above, in the optical semiconductor module and the optical amplifier according to the present invention , the processing precision for the lens and the assembling precision for the optical semiconductor module are relaxed, and the coupling efficiency between the optical semiconductor element and the optical fiber is improved. Also, an optical semiconductor module with stable oscillation wavelength is provided, and an optical amplifier with high output power and low noise is provided by using the optical semiconductor module for the optical amplifier. Therefore, the optical semiconductor module and the optical amplifier according to the present invention is appropriate for optical communication.

## Claims

1. An optical semiconductor module, comprising:
an optical semiconductor element;
a first lens arranged at a position through which a laser beam radiated from the optical semiconductor element is transmitted;
a second lens which is arranged at a position, through which the laser beam transmitted through the first lens is transmitted, and has a laser beam entrance plane which is perpendicular to an optical axis of the optical semiconductor element and is formed in a cylindrical shape; and
an optical fiber arranged at a position at which the laser beam transmitted through the second lens is converged.

2. An optical semiconductor module according to claim 1, wherein an end face of the second lens, from which the laser beam is output, is formed in a flat shape.

3. An optical semiconductor module according to claim 1, wherein an end face of the second lens, from which the laser beam is output, is attached to the optical fiber by using a bonding agent or a welding process.

4. An optical semiconductor module according to claim 3, wherein a refractive index of the second lens differs from a refractive index of a core of the optical fiber by 3 % or less.

5. An optical semiconductor module according to claim 1, wherein a film of a low reflectance for the laser beam having a wavelength of a band of 980 nm is deposited on both the first lens and the second lens, and the optical semiconductor element is formed of a semiconductor laser which oscillates the laser beam at the wavelength of the band of 980 nm.

6. An optical semiconductor module according to claim 1, wherein a periodic diffraction grating is formed in a core of the optical fiber.

7. An optical semiconductor module according to claim 1, wherein a diameter of a core of the optical fiber is enlarged at an end face of the optical fiber on which the laser beam transmitted through the second lens is incident.

8. An optical semiconductor module according to claim 1, wherein a radius of curvature of a convex curved surface of the second lens is equal to 70 µm or less, and a length of the second lens in the optical axis is equal to 210 µm or less

9. An optical amplifier, comprising:
an optical semiconductor module: and
an erbium doped optical fiber connected with the optical semiconductor module so as to receive a laser beam output from the optical semiconductor module in the optical semiconductor module, wherein the optical semiconductor module comprises
an optical semiconductor element;
a first lens arranged at a position through which the laser beam radiated from the optical semiconductor element is transmitted;
a second lens which is arranged at a position, through which the laser beam transmitted through the first lens is transmitted, and has a laser beam entrance plane which is perpendicular to an optical axis of the optical semiconductor element and is formed in a cylindrical shape; and
an optical fiber arranged at a position at which the laser beam transmitted through the second lens is converged.

10. An optical amplifier, comprising:
an optical semiconductor module: and
an erbium doped optical fiber connected with the optical semiconductor module so as to receive a laser beam output from the optical semiconductor module in the optical semiconductor module through an optical combining and branching unit, wherein the optical semiconductor module comprises
an optical semiconductor element;
a first lens arranged at a position through which the laser beam radiated from the optical semiconductor element is transmitted;
a second lens which is arranged at a position, through which the laser beam transmitted through the first lens is transmitted, and has a laser beam entrance plane which is perpendicular to an optical axis of the optical semiconductor element and is formed in a cylindrical shape; and
an optical fiber arranged at a position at which the laser beam transmitted through the second lens is converged.
